# FASCICULE DE BREVET EUROPEEN

(11) **EP 0 721 796 B1**
(45) Date de publication et mention de la délivrance du brevet: **16.04.2003**
(21) Numéro de dépôt: 96400035.0
(22) Date de dépôt: 08.01.1996
(51) Int. Cl.: B01D 53/94, B01J 23/66, B01J 37/02

(54) **Catalyseur de réduction sélective des oxydes d'azote en milieu oxydant, procédé de préparation et utilisation**
Katalysator zur selektiven Reduktion von Stichoxiden in einer oxidierenden Umgebung, Verfahren zur Herstellung und Verwendung
Catalyst for the selective reduction of nitrogen oxides in a oxidising atmosphere, process for preparation and utilisation

(30) Priorité: 11.01.1995 FR 9500259
(43) Date de publication de la demande: 17.07.1996
(73) Titulaire: INSTITUT FRANCAIS DU PETROLE, 92502 Rueil-Malmaison (FR)
(72) Inventeur: Durand, Daniel, F-92500 Rueil Malmaison (FR); Mabilon, Gil, F-78420 Carrières sur Seine (FR); Des Courtils, Nicolas, F-92380 Garches (FR)

(56) Documents cités:
- EP-A- 0 577 438
- EP-A- 0 602 602
- EP-A- 0 605 251
- DE-A- 2 440 433
- DE-A- 4 008 371

## Description

La présente invention concerne des catalyseurs d'élimination des oxydes d'azote (NO et NO₂, appelés NOx), leur procédé de préparation et leur utilisation dans un milieu surstoechiométrique en oxydants. Ces catalyseurs se caractérisent par une forte activité à basse température et par une bonne sélectivité de la conversion des oxydes d'azote en azote moléculaire au détriment de la formation non désirée de protoxyde d'azote (N₂O).

Ces catalyseurs permettent entre autres d'éliminer les oxydes d'azote présents dans les gaz d'échappement de moteurs automobiles ou stationnaires fonctionnant en mélanges pauvres, qu'il s'agisse des moteurs à allumage par compression ou des moteurs à allumage commandé à réglage pauvre. Ces catalyseurs peuvent aussi être utilisés pour éliminer les oxydes d'azote des fumées de centrales thermiques, des incinérateurs de déchets ou des turbines à gaz. Ces gaz se caractérisent par des teneurs en oxydes d'azote de quelques dizaines à quelques milliers de parties par million (ppm), par des teneurs comparables en composés réducteurs (CO, H₂, hydrocarbures) mais surtout par des concentrations importantes en oxygène (de 1 à près de 20% volume).

La forte toxicité des oxydes d'azote, leur rôle dans la formation des pluies acides et de l'ozone troposphérique ont conduit à la mise en place de normes sévères limitant les rejets de ces composés. Pour satisfaire ces normes, il est généralement nécessaire d'éliminer au moins une partie de ces oxydes présents dans les gaz d'échappement des moteurs automobiles ou stationnaires, des turbines ou des centrales thermiques et des incinérateurs.

L'élimination des oxydes d'azote par décomposition thermique ou de préférence catalytique est envisageable, mais les hautes températures exigées par cette réaction sont incompatibles avec celles des gaz d'échappement. Seule leur réduction est réalisable en utilisant les réducteurs présents, mais en faible quantités, dans le gaz d'échappement (CO, H₂, hydrocarbures imbrûlés ou dont la combustion a été imparfaite dans le moteur), et également des composés réducteurs complémentaires qu'il serait nécessaire d'injecter en amont du catalyseur. Ces agents de réduction sont des hydrocarbures, des alcools, des éthers ou autres composés oxygénés.

Les catalyseurs de l'invention permettent également de réaliser cette réduction des oxydes d'azote en utilisant comme agent réducteur le carburant du véhicule. De tels carburants peuvent être des essences, additivées ou non de composés oxygénés (par exemple des alcools ou des éthers), des gazoles, des gaz liquéfiés (GPL) ou des gaz naturels comprimés (GNC).

Ces phases catalytiques réalisent la réduction des oxydes d'azote avec des taux de conversion élevés à des températures très inférieures à celles requises avec des catalyseurs conventionnels préparés par échange de métaux de transition, en particulier le cuivre, sur des zéolites, et avec des rendements en azote améliorés par rapport aux catalyseurs préparés à base de métaux précieux (métaux du groupe du platine) sur différents supports.

En effet, les phases catalytiques mises au point par la demanderesse activent les réactions de réduction des oxydes d'azotes (NO et NO₂) en azote moléculaire (N₂), selon les équations : 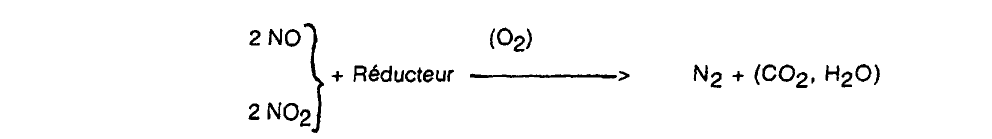 en limitant la formation non désirée de protoxyde d'azote (N₂O), selon l'équation

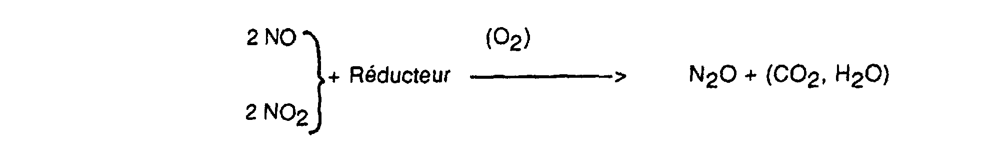

La majorité des travaux sur la mise au point de catalyseurs actifs dans l'élimination des oxydes d'azote en milieu oxydant porte sur la mise en oeuvre de métaux de transition (généralement le cuivre) échangés sur des zéolites de rapports atomiques Si/Al généralement compris entre 3 et 100 et dont les structures peuvent être de types différents (mordénite, faujasite, ZSM5, etc.). Ces catalyseurs sont actifs en conversion des oxydes d'azote pour des températures comprises entre 350 et 550°C. Ces conditions limitent donc leur utilisation à la dépollution des gaz d'échappement des moteurs à essence à réglage pauvre et des moteurs Diesel poids lourds lorsque ceux-ci fonctionnent à pleine charge et à haut régime. Malheureusement, pour les voitures Diesel légères, la température des gaz d'échappement est généralement comprise entre 150 et 300°C et dépasse rarement les 500°C.

Il faut cependant noter que ces catalyseurs sont très sélectifs pour la réduction totale des oxydes d'azote en azote moléculaire.

L'utilisation de métaux précieux du groupe du platine comme phase active permet d'obtenir des taux de conversion de ces oxydes d'azote comparables à ceux notés avec les catalyseurs au cuivre. Ces phases catalytiques présentent l'avantage d'être actives à basses températures (200 - 300°C), ce qui est compatible avec une application de dépollution des gaz d'échappement des petits véhicules Diesel.

Les métaux précieux peuvent être imprégnés sur différents supports tels que l'alumine, la silice, la zircone, l'oxyde de titane ou des zéolites, ou encore des perovskites (EP-A-455491). Ils peuvent également être introduits dans un oxyde composite (perovskite par exemple), soit par imprégnation sur ce support, soit par addition avec les autres matériaux qui servent à bâtir cet oxyde mixte (EP-A-525677).

Le document EP-A-0 605 251 décrit un système d'épuration de gaz d'échappement comprenant 2 ou 3 zones catalytiques associées successivement.

Un premier système comprend :
- 1er catalyseur : argent ou oxyde d'argent,
- 2ème catalyseur : argent ou oxyde d'argent + cuivre ou oxyde de cuivre

Un deuxième système comprend :
- 1er catalyseur : argent ou oxyde d'argent,
- 2ème catalyseur : argent ou oxyde d'argent + cuivre ou oxyde de cuivre
- 3ème catalyseur : platine, palladium, ruthénium, rhodium, iridium ou or.

Un troisième système comprend :
- 1er catalyseur : argent ou oxyde d'argent,
- 3ème catalyseur : platine, palladium, ruthénium, rhodium, iridium ou or.
   Il est mentionné que, dans chaque système, le dernier catalyseur peut aussi contenir au moins un métal alcalino-terreux (Ca, Mg, etc.) à une concentration de 2 % en poids, au moins, et au moins un métal des terres-rares (La, Ce, etc.) à une concentration de 2 % en poids, au moins.

Cependant, ce document ne présente aucune illustration de l'utilisation d'éléments de ces deux familles et aucun enseignement concernant les avantages particuliers qu'il ya a à les utiliser simultanément.

Les catalyseurs sont en général très actifs à basse température en conversion des oxydes d'azote NO et NO₂, mais malheureusement cette réduction n'est que partielle, c'est à dire que le produit de réaction est essentiellement du protoxyde d'azote (N₂O).

L'objet de la présente invention est de proposer des catalyseurs d'efficacités comparables, sinon supérieures à celles des formulations ci-dessus, pour l'élimination des oxydes d'azote, à basse température dans un mélange gazeux fortement oxydant, mais qui présentent, en outre, un rendement nettement amélioré en azote moléculaire. Cette amélioration est obtenue par une baisse de la sélectivité de la réduction des oxydes d'azote en protoxyde d'azote (N₂O) et par conséquent par un accroissement de la sélectivité en N₂.

La demanderesse propose, pour améliorer le rendement en azote dans la réaction de réduction des oxydes d'azote dans des gaz d'échapppement surstochiométriques en oxygène, de mettre en oeuvre des catalyseurs préparés par dépôt d'au moins un métal précieux appartenant à la famille du platine (Pt, Pd, Rh, Ir, Ru, Os, Re) et d'au moins un métal noble, argent et/ou or, sur un oxyde inorganique réfractaire modifié par ajout d'au moins une terre rare et d'au moins un élément alcalino-terreux.

Des catalyseurs renfermant des métaux précieux (généralement le platine, le palladium et le rhodium ou leurs mélanges), des alcalino-terreux et des terres rares sont déjà décrits pour dépolluer les gaz d'échappement de moteurs à combustion interne. En général, ils sont mis en oeuvre dans le cadre de catalyse trois voies ,c'est à dire avec des compositions de gaz à la stoechiométrie ou proche de cet équilibre chimique entre composés oxydants et composés réducteurs (JP-A-05/237384, EP-A-507590 et EP-A-199509). Dans ces catalyseurs, l'ajout de ces éléments alcalino-terreux et de terres rares a pour objectif d'améliorer la stabilité thermique du catalyseur et d'accroître sa durée de vie.

Il a été proposé un catalyseur où du platine et du lanthane sont déposés sur un support poreux pour éliminer les polluants, dont les NOx, dans un gaz d'échappement renfermant un excès d'oxygène (JP-A-05/168862).

On a aussi décrit (JP-A-05/317721) le dépôt de métaux précieux (famille du platine) sur une zéolite renfermant des terres rares et des éléments alcalino-terreux. Ces catalyseurs, dopés par ces deux éléments, sont plus actifs en élimination des oxydes d'azote à basse température et ont une meilleure tenue thermique.

Ces mêmes ajouts sont également décrits dans le brevet EP-A-562516, où il est indiqué que la formation d'un composé de type BaLa₂O₄, est censée éviter l'interaction du lanthane et de l'alumine, favorisant ainsi une meilleure dispersion du métal précieux et limitant son frittage, en particulier lorsque le mélange gazeux est très oxydant.

Pour atteindre les objectifs d'activité et de sélectivité tout en abaissant le rapport molaire (réducteur / oxyde d'azote), la demanderesse propose la mise en oeuvre, dans le système catalytique, d'au moins un métal précieux appartenant à la famille du platine et d'au moins un métal noble, argent et/ou or. Ces métaux sont dispersés sur au moins un oxyde inorganique réfractaire modifié par l'ajout d'au moins un élément appartenant au groupe des terres rares et d'au moins un élément appartenant au groupe des alcalino-terreux. Ce catalyseur permet d'éliminer les oxydes d'azote présents dans un gaz surstoechiométrique en oxydants, en particulier en oxygène, par réduction au moyen d'agents réducteurs présents dans le milieu, ou injectés en amont du catalyseur. La réaction est réalisée à basse température avec un rendement élevé en azote moléculaire et une sélectivité faible en protoxyde d'azote, produit non désiré. Ces phases actives (ou phases catalytiques) se présentent sous forme de billes, de

pastilles, ou d'extrudés. Elles peuvent être également déposées sur des supports monolithiques en céramique ou en métal. La présente invention propose donc un catalyseur pour la réduction des oxydes

d'azote en azote moléculaire dans un milieu surstoechiométrique en oxydants, par des agents réducteurs, comprenant une phase active dont la composition, exprimée en pourcent masse par rapport au produit calciné à 1000°C pendant 4h, est la suivante:
- de 50 à 99,78% d'au moins un oxyde inorganique réfractaire,
modifié par ajout
- de 0,1 à 20% d'au moins un élément (A ) appartenant au groupe des terres rares, exprimé sous forme d'oxyde, et
- de 0,1 à 15% d'au moins un élément (B) appartenant au groupe IIA des alcalino-terreux, exprimé sous forme d'oxyde,
et sur lequel sont déposés
- de 0,01 à 5% d'au moins un métal (C) appartenant au groupe des métaux précieux de la famille du platine, et
- de 0,01 à 10% d'au moins un métal (D) appartenant au groupe des métaux nobles, argent et or.

De manière avantageuse, la composition massique de la phase catalytique, exprimée en pourcent masse par rapport à sa masse anhydre, calcinée à 1000°C pendant 4 heures, est :
- de 67 à 98.3% d'au moins un oxyde inorganique réfractaire,
- de 1 à 15% d'au moins un élément (A ) appartenant au groupe des terres rares, exprimé sous forme d'oxyde,
- de 0,5 à 10% d'au moins un élément (B) appartenant au groupe IIA des alcalino-terreux, exprimé sous forme d'oxyde,
- de 0,1 à 3% d'au moins un métal (C) appartenant au groupe des métaux précieux de la famille du platine, et
- de 0,1 à 5% d'au moins un métal (D) appartenant au groupe des métaux nobles, argent et or.

Les catalyseurs de l'invention, actifs en réduction sélective des oxydes d'azote dans un milieu riche en oxygène, peuvent se présenter sous forme de billes, de pastilles ou d'extrudés.

Le procédé de préparation comprend différentes étapes unitaires qui sont:
a) - au moins une étape d'imprégnation d'un support constitué d'au moins un oxyde inorganique réfractaire, par tout ou partie d'au moins un précurseur d'au moins une terre rare (A) et/ou tout ou partie d'au moins un précurseur d'au moins un métal alcalino-terreux (B), éventuellement par au moins une partie d'au moins un précurseur d'au moins un métal précieux (C), et éventuellement par au moins une partie d'au moins un précurseur d'au moins un métal noble (D),
b) - au moins une deuxième étape d'imprégnation par le reste éventuel des précurseurs d'au moins une terre rare (A) et/ou d'au moins un métal alcalino-terreux (B), éventuellement par tout ou partie du reste d'au moins un précurseur d'au moins un métal précieux (C) éventuellement par tout ou partie du reste d'au moins un précurseur d'au moins un métal noble (D),
c) - au moins une troisième étape d'imprégnation par tout ou partie du reste éventuel d'au moins un précurseur d'au moins un métal précieux (C) et/ou par tout ou partie du reste éventuel d'au moins un précurseur d'au moins un métal noble (D),
d) - au moins une quatrième étape d'imprégnation par le reste éventuel d'au moins un précurseur d'au moins un métal noble (D) et/ou par le reste éventuel d'au moins un précurseur d'au moins un métal précieux (C), et
e) - une étape de traitement thermique en milieu oxydant, neutre ou réducteur, après chaque étape d'imprégnation à une température comprise entre 200 et 900°C.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations, soit par attrition, soit par fracturation.

Ces monolithes peuvent être :
- soit en céramique dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal; ils sont alors obtenus à partir d'alliages de fer, chrome et aluminium dopés éventuellement par du nickel, du cobalt, du cérium ou de l'yttrium; les plus connus ont comme appellation FECRALLOY® ou KANTHAL®.

Les supports métalliques peuvent être réalisés par l'enroulement de feuillards ondulés ou par l'empilement de feuilles métalliques également ondulées, constituant une structure en nid d'abeille à canaux droits ou à canaux en zig zag, communiquant entre eux ou non. Ils peuvent être également réalisés à partir de fibres ou de fils métalliques enchevêtrés, tissés ou tressés.

Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

Les catalyseurs sont préparés par enduction de ces supports monolithiques par une suspension renfermant tout ou partie des éléments constituant la phase catalytique. Les éléments, non introduits dans les étapes précédentes, sont imprégnés en une ou plusieurs étapes sur le monolithe enduit, sous forme d'une solution de leurs sels précurseurs.

Dans le cas où cette phase active est déposée sur un support monolithique (ou substrat), la quantité de matière fixée sur le support est généralement comprise entre 20 et 300g et avantageusement entre 50 et 200g par litre dudit support.

Les différentes étapes d'une méthode de préparation du catalyseur de l'invention sur support monolithique consistent à enduire le support par l'oxyde inorganique réfractaire, puis à imprégner successivement les précurseurs des différents éléments constituant la phase catalytique. Chacune de ces imprégnations est suivie d'un traitement thermique spécifique qui a pour but de stabiliser et de conditionner la phase préalablement constituée, dans un état ou l'interaction avec la phase suivante est la plus appropriée.

L'oxyde inorganique réfractaire est généralement choisi dans le groupe formé par au moins un des composés ci-après : l'alumine alpha, l'alumine bêta, l'alumine delta, l'alumine gamma, l'alumine khi, l'alumine thêta, les silices, les silice-alumines, les zéolites, l'oxyde de titane, l'oxyde de zirconium et leurs combinaisons, des oxydes mixtes ou des solutions solides comprenant au moins deux des oxydes précités. On préfère utiliser les alumines qui présentent à la fois une surface spécifique assez importante, en général de 10 à 250m²/g, mais de préférence de 50 à 150m²/g, et une stabilité thermique adaptée aux conditions de fonctionnement de ces catalyseurs.

L'oxyde inorganique est enduit sur le support monolithique en céramique ou en métal selon une technique connue de l'homme de l'art. Elle consiste à préparer une suspension aqueuse de cet oxyde avec un composé minéral ou organique qui permet de fixer cet oxyde sur le support. En général ce composé, appelé liant, est un gel d'alumine (boehmite) ou un sol de silice, que l'on ajoute dans la suspension renfermant un acide organique ou minéral (agent peptisant). L'opération de dépôt de cet oxyde est réalisée par immersion du monolithe dans la suspension, par circulation de la suspension dans le monolithe ou par pulvérisation de cette suspension sur le monolithe. Après élimination de l'excédent de suspension, le film d'oxyde est fixé sur le support par séchage puis calcination de l'ensemble à une température généralement comprise entre 300 et 900°C, de préférence entre 400 et 700°C.

Pour que les métaux précieux soient moins en interaction avec l'oxyde inorganique réfractaire (interaction favorisée par l'acidité du support), on ajoute des éléments ayant une caractère basique qui s'échangent facilement avec les sites acides de l'oxyde. Parmi ces agents, la demanderesse privilégie des éléments (A) appartenant au groupe des terres rares, mais également des éléments (B) appartenant au groupe IIA des alcalino-terreux.

Ces éléments sont ajoutés à la phase inorganique réfractaire, soit sous forme de pigments (sels ou oxydes), soit de préférence par imprégnations successives d'au moins un sel soluble d'au moins un élément de chacun des deux groupes, ou par co-imprégnation d'au moins un sel soluble d'au moins un élément de chacun des deux groupes (alcalino-terreux et terres rares).

Dans le groupe des terres rares (A), les éléments privilégiés sont le lanthane, le néodyme, le praséodyme ou le mélange d'au moins deux de ces éléments, et d'une façon préférentielle le lanthane.

Les composés de terres rares (A) introduits sous forme de pigments sont alors des carbonates, des oxalates ou des sulfates; mais d'une façon privilégiée on réalisera une imprégnation d'une solution aqueuse d'au moins un de leurs précurseurs, tels que les nitrates.

La teneur en terre rare (A) dans le catalyseur fini, exprimée sous forme d'oxyde, est comprise entre 0,1 et 20% et de préférence entre 2 et 15% masse par rapport à la masse totale de la phase catalytique.

Un traitement thermique est réalisé en général entre 200 et 900°C, mais de préférence entre 300 et 900°C, pour que le précurseur se décompose sous forme d'oxyde et de composé mixte après réaction avec l'oxyde réfractaire.

Dans le groupe IIA des alcalino-terreux (B), la demanderesse préfère mettre en oeuvre le calcium, le baryum, le strontium ou le mélange d'au moins deux de ces éléments, et, d'une façon privilégiée, le baryum.

Ces éléments peuvent être introduits sous forme de pigments, tels que les oxydes, les carbonates ou les sulfates. Mais d'une façon privilégiée, on imprègne des précurseurs de ces éléments sur l'oxyde réfractaire. Dans ce cas, les sels solubles dans l'eau utilisés sont de préférence les nitrates, les acétates et les formates.

La teneur en éléments alcalino-terreux (B) dans le catalyseur fini, exprimée sous la forme d'oxydes, est comprise entre 0,1 et 15% et de préférence entre 2 et 10% masse par rapport à la masse totale de la phase catalytique.

L'élément le plus actif pour l'élimination des oxydes d'azote, et plus particulièrement pour leur réduction en milieu oxydant, est le métal précieux (C). Dans le groupe du platine, du palladium, du rhodium, du ruthénium, de l'iridium, du rhénium et de l'osmium, la demanderesse préfère mettre en oeuvre le platine, le ruthénium ou l'iridium ou le mélange d'au moins deux de ces éléments.

L'ajout de l'élément (C) appartenant à la famille des métaux précieux peut être réalisé par introduction du précurseur du métal après la modification de l'oxyde réfractaire par ajout de l'élément alcalino-terreux (B) et/ou de l'élément du groupe des terres rares (A). Avant imprégnation du précurseur dudit métal précieux, l'oxyde réfractaire modifié est stabilisé thermiquement par une calcination conduite entre 200 et 900°C et de préférence entre 300 et 900°C.

Les précurseurs des métaux précieux (C) sont ceux classiquement utilisés pour la préparation de catalyseurs, en particulier et quand ils existent, les chlorures, les homologues acides des chlorures, les complexes chlorés, les nitrates, les complexes aminés, les acétylacétonates. A titre d'exemples non limitatifs, on peut citer l'acide hexachloroplatinique, le chlorure de platine tétramine, le dinitroso-diamino platine, l'acide hexachloro-iridique, le trichlorure de ruthénium, le dichlorure de ruthénium pentamine.

La teneur en métal précieux (C) dans le catalyseur fini est comprise entre 0,01 et 5% et de préférence entre 0,1 et 3% masse par rapport à la masse totale de la phase catalytique.

Le traitement thermique peut être réalisé dans une atmosphère oxydante (sous air plus ou moins dilué par de l'azote), neutre (sous azote). Mais la demanderesse préfère un traitement thermique en milieu légèrement réducteur, par exemple sous hydrogène dilué ou sous gaz de combustion pauvre en oxygène.

La température du traitement thermique réducteur après séchage est généralement comprise entre 200 et 900°C mais de préférence entre 300 et 700°C.

L'atmosphère réductrice du milieu devra correspondre à l'équivalence d'une teneur en hydrogène comprise entre 0,01% et 5% volume dans le gaz de traitement et de préférence entre 0,1 et 1% volume. Ainsi, pour un mélange de combustion (air + gaz naturel) permettant le chauffage direct du four de traitement, la sous-stoechiomètrie en oxygène par rapport à la quantité nécessaire à la combustion totale du gaz de combustion devra être inférieure de 0,005 à 2,5% et de préférence de 0,05 à 0,5%.

L'ajout du métal noble (D), qui de manière inattendue permet de renforcer l'orientation de la conversion des oxydes d'azote vers la formation d'azote moléculaire aux dépens de celle non désirée du protoxyde d'azote, peut éventuellement être réalisé en même temps que celle du métal précieux, par co-imprégnation. Cependant, la sélectivité du catalyseur est améliorée si le métal noble (D) est introduit après le traitement ci-dessus, et d'une manière privilégiée et inattendue, si cette introduction est réalisée sous atmosphère neutre ou légèrement réductrice.

Les deux métaux nobles (D), l'or et/ou l'argent sont introduits par imprégnation d'une solution de leurs précurseurs solubles en milieu aqueux ou hydrocarboné. Le nitrate d'argent, et l'acide chloro-aurique sont généralement utilisés.

La teneur en métal noble (D) dans le catalyseur fini est comprise entre 0,01 et 10% et de préférence entre 0,1 et 5% masse par rapport à la masse totale de la phase catalytique.

Le traitement final peut être réalisé sous atmosphère oxydante, neutre ou légèrement réductrice, à une température généralement comprise entre 200 et 900°C, mais de préférence entre 300 et 700°C.

Les exemples 1, 5, et 7 à 11, ci-après illustrent l'invention sans en limiter la portée. Dans ces exemples, il est décrit uniquement la préparation directe des catalyseurs sur support monolithique. Cependant ces phases peuvent être également préparées sur des supports billes, extrudés ou pastilles, préformés avant la préparation, ou encore mises en forme par dragéification, extrusion ou pastillage.

Les exemples 2 à 4 et 6, décrivent la préparation de catalyseurs selon l'art antérieur. Ils sont testés à titre de comparaison dans les exemples 12 et 13.

### EXEMPLES

### Exemple 1 (invention)

On disperse 250g d'alumine liante (boehmite) sous forme de poudre dans 2500cm³ d'eau distillée renfermant l'équivalent de 18g d'acide nitrique. On introduit ensuite 850g d'alumine charge (alumine gamma) de surface spécifique 110m²/g.

Cette suspension est broyée de telle manière que la granulométrie moyenne des particules solides soit inférieure à 10 microns.

Un monolithe céramique de 0,904 litre, vendu par la société Corning, et présentant une structure en nid d'abeille avec une densité de 62 cellules par cm² est enduit par cette suspension. Pour réaliser cette opération, le support est immergé dans le milieu pendant quelques secondes, secoué et soufflé pour éliminer l'excédent de produit qui obstrue les canaux. Le support, recouvert par le film de matière, est séché puis calciné à 600°C afin de fixer l'enduit (ou "wash coat") au support.

Après une deuxième opération d'enduction, la teneur en "wash coat" est de 110g par litre de support.

On prépare une solution aqueuse équimoléculaire de nitrate de lanthane et de nitrate de baryum de telle manière que leur concentration soit de 0,5 mole par litre.

Le monolithe enduit d'alumine est imprégné par cette solution de nitrates puis séché à 120°C pendant 2h et calciné à 700°C pendant 4 h.

Après calcination, les teneurs massiques en lanthane et en baryum, exprimée en équivalent oxyde (La₂O₃ et BaO) par rapport à la couche d'alumine enduite et imprégnée du catalyseur fini, sont respectivement de 7,4% et 5,7% masse.

Ce monolithe est ensuite imprégné par une solution d'acide hexachloroplatinique de telle manière qu'après séchage et traitement thermique, la teneur en platine exprimée par rapport au volume du support monolithique enduit et imprégné soit de 1g par litre.

Le traitement thermique est réalisé sous atmosphère réductrice dont la composition volumique est de 1% d'hydrogène dans l'azote. La température de traitement est comprise entre la température ambiante et 600°C.

Le monolithe enduit est ensuite mis au contact d'une solution d'acide chloro-aurique de telle manière que la teneur en or après traitement thermique soit de 0,25g par litre de substrat.

Le traitement thermique final est réalisé sous air entre la température ambiante et 500°C.

### Exemple 2 (comparatif)

On reproduit le catalyseur de l'exemple 1 à l'exception que l'étape d'imprégnation de la solution d'acide chloro-aurique est supprimée. La teneur en platine est de 1g par litre de substrat.

### Exemple 3 (comparatif)

On reproduit le catalyseur de l'exemple 1 à l'exception que le monolithe enduit d'alumine est imprégné par une solution ne contenant que du nitrate de lanthane, puis après calcination par une solution d'acide chloro-platinique.

La concentration en oxyde de lanthane est de 7,4% masse par rapport à la couche d'alumine enduite et imprégnée du catalyseur fini, et la teneur en platine est de 1g par litre de substrat.

### Exemple 4 (comparatif)

On reproduit le catalyseur de l'exemple 1 à l'exception que le monolithe enduit alumine est imprégné par une solution ne contenant que du nitrate de baryum, puis après calcination par une solution d'acide chloro-platinique.

La concentration en oxyde de baryum est de 5,7% masse par rapport à la couche d'alumine enduite et imprégnée du catalyseur fini, et la teneur en platine est de 1g par litre de substrat.

### Exemple 5 (invention)

On reproduit le catalyseur de l'exemple 1 à l'exception que la solution d'imprégnation de l'alumine renferme 1 mole/l de nitrate de baryum et 1,5 mole/l de nitrate de lanthane.

Après calcination, la teneur massique en lanthane et en baryum, exprimée en équivalent oxyde (La₂O₃ et BaO) par rapport à la couche d'alumine enduite et imprégnée du catalyseur fini, est de 17,3% en oxyde de lanthane et de 9,1 % en oxyde de baryum.

L'étape d'introduction du platine est identique à celle d'écrite dans l'exemple 1. L'imprégnation de la solution d'acide chloro-aurique est remplacée par celle d'une solution de nitrate d'argent de telle manière que la teneur en argent dans le catalyseur fini, soit de 0,5g par litre de substrat.

### Exemple 6 (comparatif)

On reproduit le catalyseur de l'exemple 5 à l'exception que l'étape d'imprégnation de la solution d'acide chloro-platinique est supprimée.

### Exemple 7 (invention)

On reproduit le catalyseur de l'exemple 1 à l'exception que la solution d'imprégnation de l'alumine renferme 0,5 mole/l de nitrate de calcium et 1,5 mole/l de nitrate de lanthane.

Après calcination, la teneur massique en lanthane et en calcium, exprimée en équivalent oxyde (La₂O₃ et CaO) par rapport à la couche d'alumine enduite et imprégnée du catalyseur fini, est de 17,3% en oxyde de lanthane et de 2,1 % en oxyde de calcium.

Au lieu d'imprégner une solution de platine seul, on imprègne une solution mixte d'acide chloro-platinique et d'acide chloro-iridique de telle manière que les teneurs respectives en platine et en iridium soient de 0,8g et de 0,2g par litre de substrat.

L'étape d'imprégnation de la solution chloro-aurique est identique à celle décrite dans l'exemple 1, à l'exception que la concentration de la solution est ajustée de telle manière que la teneur en or dans le catalyseur fini soit de 0,5g par litre de substrat.

### Exemple 8 (invention)

On reproduit le catalyseur de l'exemple 1 à l'exception que la solution d'imprégnation de l'alumine renferme 0,35 mole/l de nitrate de strontium et 1,3 mole/l de nitrate de lanthane.

Après calcination, la teneur massique en lanthane et en strontium, exprimée en équivalent oxyde (La₂O₃ et SrO) par rapport à la couche d'alumine enduite et imprégnée du catalyseur fini, est de 15,1% en oxyde de lanthane et de 2,5 % en oxyde de strontium.

Au lieu d'imprégner une solution de platine seul, on imprègne une solution mixte d'acide chloro-platinique et de chlorure de ruthénium de telle manière que la teneur en platine soit de 0,85g et celle en ruthénium de 0,15g par litre de substrat.

L'étape d'imprégnation de la solution de nitrate d'argent est identique à celle décrite dans l'exemple 5, à l'exception que la concentration de la solution est ajustée de telle manière que la teneur en argent dans le catalyseur fini soit de 1g par litre de substrat.

### Exemple 9 (invention)

Sur des billes d'alumine de type gamma ayant une surface spécifique de 110m²/g on imprègne une solution mixte de nitrate de lanthane, de nitrate de praséodyme et de nitrate de baryum, de telle manière que les concentrations massiques en ces oxydes sur l'alumine soient respectivement de 5% (La₂O₃), 2,5% (Pr₆O₁₁) et 3,5% (BaO).

Sur cette alumine calcinée après imprégnation, on imprègne une solution d'acide chloro-platinique de telle manière que la teneur en platine soit de 1.3% en masse.

Après un traitement thermique réducteur identique à celui décrit dans l'exemple 1, on imprègne les billes avec une solution d'acide chloro-aurique de telle manière que la teneur en or sur les billes après calcination soit de 0,5% en masse.

Ces billes sont ensuite broyées puis enduites selon la méthode décrite dans l'exemple 1, mais le support céramique est remplacé par un support métallique de type enroulé de la société ROSI, préalablement pré-oxydé à 900°C.

Cette enduction est réalisée en trois fois afin de pouvoir déposer sur le substrat métallique l'équivalent de 150g de phase active par litre de substrat.

### Exemple 10 (invention)

Sur un monolithe métallique de type empilé, à canaux droits ou zig zag, de la société ROSI, on reproduit le catalyseur de l'exemple 9 aux exceptions suivantes:
- l'alumine est imprégnée par une solution de nitrate de lanthane et de néodyme, puis calcinée et réimprégnée par une solution de nitrate de strontium. Les teneurs massiques en oxydes dans la phase active du catalyseur fini sont respectivement de 5% (La₂O₃), 3% (Nd₂O₃) et 5,5% (SrO);
- le sel de platine imprégné sur cette alumine modifiée est le dinitroso-diamino platine et la teneur en métal est calculée de telle manière que la quantité soit de 0.5g par litre de substrat; et
- l'ajout des métaux nobles est réalisé par imprégnations successives, sur le monolithe enduit, de nitrate d'argent puis d'acide chloro-aurique de telle manière que les teneurs respectives soient de 0,6g d'argent et de 0,4g d'or par litre de substrat.

### Exemple 11 (invention)

Sur un support métallique à structure fibrillaire, on enduit une suspension constituée par un mélange mécanique d'alumine thêta, d'oxyde de titane et de zircone dans des proportions massiques respectivement égales à 75% (Al₂O₃), 15% (TiO₂) et 10% (ZrO₂). L'enduction est réalisée en mettant en oeuvre un gel de silice (ludox) à la place du liant alumine (boehmite) et l'acide mis en jeu est l'acide acétique (pH=5.2). La teneur en silice dans le catalyseur final (phase active déposée sur le substrat métallique) étant de 10% poids.

On imprègne ensuite sur le monolithe enduit une solution de dinitroso-diamino platine de telle manière que la teneur en platine sur le catalyseur fini corresponde à 1g de platine par litre de substrat.

Après traitement thermique sous mélange réducteur (1% hydrogène dans l'azote à une température comprise entre 25 et 500°C), on imprègne l'équivalent de 1g d'argent par litre de substrat sous forme d'une solution de nitrate d'argent, puis on sèche et calcine sous air le substrat enduit et imprégné jusqu'à une température de 600°C.

Pour chacun des catalyseurs décrits ci-dessus, la masse et la composition massique de la phase active déposée sur le support céramique ou métallique, (oxydes inorganiques réfractaires, oxydes de terres rares (A), éléments appartenant au groupe des alcalino-terreux (B), métaux précieux (C) et métaux nobles (C)), sont rassemblées dans le tableau I.

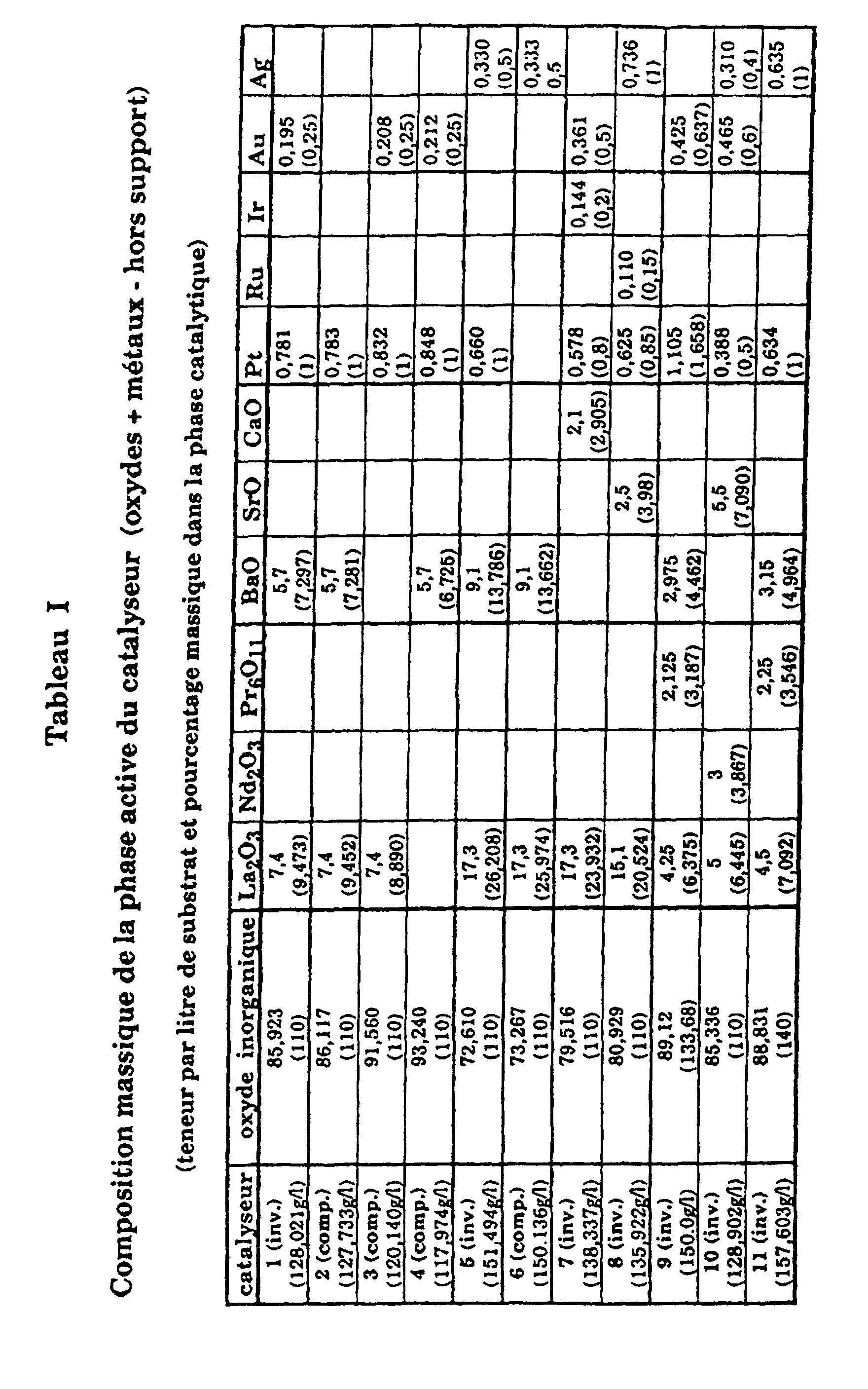

### Exemple 12

Les catalyseurs préparés sur supports céramique sont testés au laboratoire dans une micro-unité avec un mélange de gaz synthétique renfermant les principales familles de composés présents dans un gaz d'échappement d'un moteur Diesel. Les conditions opératoires sont les suivantes:

| | |
|---|---|
| **vitesse spatiale** | 10000h⁻¹ |
| (VVH) | |
| | |
| **composition du mélange** | |
| | |
| NOx | 600ppm |
| Hydrocarbures | 600ppmC |
| | (équivalent méthane) |
| O₂ | 5% |
| CO₂ | 10% |
| CO | 500ppm |
| H₂O | 10% |
| SO₂ | 20ppm |
| N₂ | complément à 100% |
| | |
| **température** | montée de 150 à 500°C(5°C/min.) |

L'analyse des principaux composants est réalisée en continu à la sortie du réacteur par des analyseurs à détection infra-rouge pour le monoxyde de carbone (CO) et le protoxyde d'azote (N₂O), par ionisation de flamme pour les hydrocarbures (HC) et par chimiluminescence pour les oxydes d'azote (NO et NO₂).

Ces résultats d'analyse permettent de déterminer les évolutions de la conversion des oxydes d'azote, de la sélectivité en protoxyde d'azote et du rendement azote en fonction de l'évolution de la température de réaction.

Les formules de calcul pour ces trois paramètres (exprimé en %) sont les suivantes:

| | |
|---|---|
| Conversion NOx | C = 100 x (NOx entrée - NOx sortie) / NOx entrée |
| Sélectivité N₂O | S = 100 x (2 x N₂O formé) / NOx disparu |
| Rendement N₂ | R = C x (100-S) / 100 |

Dans le tableau II ci-dessous sont rassemblés les valeurs des températures et des trois paramètres ci-dessus calculés pour les conditions de tests correspondant aux plus faibles émissions en NOx à la sortie du catalyseur (conversion les plus fortes).

**Tableau II**

| **Tests catalytiques en micro - unité** | | | | | |
|---|---|---|---|---|---|
| Catalyseur | Composition | Conversion NOx max, (%) | Sélectivité N2O (%) | Rendement N2 (%) | Température Conversion Max, (°C) |
| 1 (inv.) | Al₂O₃ La - Ba Pt - Au | 70 | 28 | 50,4 | 270 |
| 2 (comp.) | Al₂O₃ La - Ba Pt | 72 | 39 | 43,9 | 265 |
| 3 (comp.) | Al₂O₃ La Pt - Au | 69 | 42 | 40,0 | 265 |
| 4 (comp.) | Al₂O₃ Ba Pt - Au | 66 | 45 | 36,3 | 280 |
| 5 (inv.) | Al₂O₃ La - Ba Pt - Ag | 65 | 24 | 49,4 | 275 |
| 6 (comp.) | Al₂O₃ La - Ba Ag | 20 | 83 | 16,6 | 410 |
| 7 (inv.) | Al₂O₃ La - Ca Pt - Ir - Au | 67 | 30 | 46,9 | 260 |
| 8 (inv.) | Al₂O₃ La - Sr Pt - Ru - Ag | 63 | 22 | 49,1 | 255 |

On constate que les conversions maximales et les températures les plus basses pour atteindre ces maxima ne sont pas toujours en faveur des catalyseurs de l'invention. Cependant, l'objectif de l'élimination des oxydes d'azote dans un gaz d'échappement est de les réduire en azote moléculaire (N₂) inerte, et non pas de les transformer en protoxyde d'azote (N₂O) qui est un sous produit polluant non désiré.

Par conséquent, les catalyseurs de l'invention sont donc les plus performants pour la réaction de réduction de tous les composés oxygénés de l'azote en azote moléculaire : les sélectivités N₂O sont les plus faibles et les rendements en azote sont les plus élevés.

### Exemple 13

Les catalyseurs préparés sur supports métalliques ont été testés sur banc moteur équipés d'un moteur Diesel de cylindrée moyenne (1,9 litres). Le régime moteur du véhicule est maintenu constant (2300t/mn). Pour que la température des gaz d'échappement devienne plus élevée, la charge du moteur est progressivement augmentée par l'intermédiaire d'un frein hydraulique.

Dans ces conditions, les émissions d'oxydes d'azote et d'hydrocarbures imbrûlés ou partiellement oxydés varient peu : les teneurs sont respectivement de 200 à 300ppm en NOx et 50 à 150ppmC (équivalent méthane).

Pour qu'une partie significative des oxydes d'azote puisse être éliminée par réduction catalytique, on injecte en amont du catalyseur un appoint de gazole de telle manière que sa concentration dans le gaz d'échappement avant catalyse soit équivalente à 3000ppmC (équivalent méthane). La vitesse spatiale des réactifs sur le catalyseur est maintenue pratiquement constante et égale à 30000h⁻¹ et la température du gaz en entrée du catalyseur varie entre 250 et 500°C.

Le tableau III résume les performances obtenues avec ces catalyseurs, en particulier les taux de conversion maximum des oxydes d'azote et les températures pour lesquelles ils ont été obtenus.

**Tableau III**

| **Tests catalytiques sur Moteur Diesel** (banc moteur) | | | | |
|---|---|---|---|---|
| Catalyseur | Composition | Support | Conversion NOx max. (%) | Température Conversion Max. (°C) |
| 1 | Al₂O₃ La - Ba Pt - Au | céramique | 47 | 244 |
| 9 | Al₂O₃ La - Pr - Ba Pt - Au | métallique enroulé | 38 | 232 |
| 10 | Al₂O₃ La - Nd - Sr Pt - Au - Ag | métallique empilé | 46 | 265 |
| 11 | Al₂O₃ - TiO2 ZrO2 -SiO2 La - Pr - Ba Pt - Au | métallique fibrillaire | 42 | 249 |

On constate que les taux de conversion des oxydes d'azote dans les gaz d'échappement de moteur Diesel sur les catalyseurs de l'invention et dans les conditions opératoires définies ci-dessus sont d'environ 40 à 50% pour des températures comprises entre environ 230 et 265°C.

## Revendications

1. Catalyseur pour la réduction des oxydes d'azote en azote moléculaire dans un milieu surstoechiométrique en oxydants par des agents réducteurs, comprenant une phase active dont la composition, exprimée en pourcent masse par rapport au produit calciné à 1000°C pendant 4h, est la suivante:
• de 50 à 99,78% d'au moins un oxyde inorganique réfractaire,
modifié par ajout
• de 0,1 à 20% d'au moins un élément (A) appartenant au groupe des terres rares, exprimé sous forme d'oxyde, et
• de 0,1 à 15% d'au moins un élément (B) appartenant au groupe IIA des alcalino-terreux, exprimé sous forme d'oxyde,
et sur lequel sont déposés
• de 0,01 à 5% d'au moins un métal (C) appartenant au groupe des métaux précieux de la famille du platine, et
• de 0,01 à 10% d'au moins un métal (D) appartenant au groupe des métaux nobles, argent et or.

2. Catalyseur selon la revendication 1, **caractérisé en ce que** l'oxyde inorganique réfractaire est l'alumina alpha, l'alumine bêta, l'alumine delta, l'alumine gamma, l'alumine khi, l'alumine thêta, les silices, les silice-alumines, les zéolites, l'oxyde de titane, l'oxyde de zirconium et leurs combinaisons, les oxydes mixtes ou une solution solide comprenant au moins deux des oxydes précités.

3. Catalyseur selon la revendication 2, **caractérisé en ce que** l'oxyde inorganique réfractaire est l'alumine.

4. Catalyseur selon l'une des revendications 1 à 3, **caractérisé en ce que** l'élément (A) appartenant au groupe des terres rares est le lanthane, le néodyme, le praséodyme ou le mélange d'au moins deux de ces éléments.

5. Catalyseur selon la revendication 4, **caractérisé en ce que** l'élément (A) appartenant au groupe des terres rares est le lanthane.

6. Catalyseur selon l'une des revendications 1 à 5, **caractérisé en ce que** l'élément (B) appartenant aux groupes IIA des éléments alcalino-terreux est, le calcium, le baryum, le strontium ou le mélange d'au moins deux de ces éléments.

7. Catalyseur selon la revendication 6, **caractérisé en ce que** l'élément (B) appartenant au groupe des alcalino-terreux est le baryum.

8. Catalyseur selon l'une des revendications 1 à 7, **caractérisé en ce que** le métal (C) appartenant au groupe des métaux précieux est le platine, le ruthénium, l'iridium ou le mélange d'au moins deux de ces éléments.

9. Catalyseur selon la revendication 8, **caractérisé en ce que** l'élément (C) appartenant au groupe des métaux précieux est le platine.

10. Catalyseur selon l'une des revendications 1 à 9, **caractérisé en ce que** la composition de la phase active, exprimée en pourcent masse par rapport au produit calciné à 1000°C, pendant 4 h, est:
• de 67 à 98.3% d'au moins un oxyde inorganique réfractaire,
• de 1 à 15% d'au moins un élément (A ) appartenant au groupe des terres rares, exprimé sous forme d'oxyde,
• de 2 à 10% d'au moins un élément (B) appartenant au groupe IIA des alcalino-terreux, exprimé sous forme d'oxyde,
• de 2 à 3% d'au moins un métal (C) appartenant au groupe des métaux précieux de la famille du platine, et
• de 0,1 à 5% d'au moins un métal (D) appartenant au groupe des métaux nobles, argent et or.

11. Catalyseur selon l'une des revendications 1 à 10, **caractérisé en ce que** la phase catalytique se présente sous forme de billes, d'extrudés ou de pastilles.

12. Catalyseur selon l'une des revendications 1 à 10, **caractérisé en ce que** la phase catalytique est supportée sur un substrat monolithique.

13. Catalyseur selon la revendication 12, **caractérisé en ce que** ledit substrat monolithique est en céramique ou en métal.

14. Catalyseur selon la revendication 13, **caractérisé en ce que** le substrat métallique a une structure enroulée ou empilée à canaux droit ou en zig zag, ou une stucture fibrillaire.

15. Catalyseur selon l'une des revendications 12 à 14, **caractérisé en ce que** la masse de la phase catalytique déposée ou préparée sur le substrat monolithique est comprise entre 20 et 300g et de préférence entre 50 et 200g par litre de substrat.

16. Procédé de préparation d'un catalyseur selon l'une des revendications 1 à 11, **caractérisé en ce qu'**il comprend :
a) - une étape d'imprégnation d'un support constitué d'au moins un oxyde inorganique réfractaire, par tout ou partie d'au moins un précurseur d'au moins une terre rare (A) et/ou tout ou partie d'au moins un précurseur d'au moins un métal alcalino-terreux (B), suivie par
b) - éventuellement une étape d'imprégnation par le reste des précurseurs d'au moins une terre rare (A) et/ou d'au moins un métal alcalino-terreux (B), suivie par
c) - une étape d'imprégnation par tout ou partie d'au moins un précurseur d'au moins un métal précieux (C) et/ou par tout ou partie d'au moins un précurseur d'au moins un métal noble (D), suivie par
d) - éventuellement une étape d'imprégnation par le reste d'au moins un précurseur d'au moins un métal noble (D) et/ou par le reste éventuel d'au moins un précurseur d'au moins un métal précieux (C),
e) - une étape de traitement thermique en milieu oxydant, neutre ou réducteur après chaque étape d'imprégnation à une température comprise entre 200 et 900°C.

17. Procédé de préparation d'un catalyseur selon la revendication 16, **caractérisé en ce qu'**il comprend :
a) - une étape d'imprégnation d'un support constitué d'au moins un oxyde inorganique réfractaire par les précurseurs d'au moins une terre rare (A) et d'au moins un métal alcalino-terreux (B),
b) - une première étape de calcination entre 200 et 900°C, et de préférence entre 300 et 900°C,
c) - une seconde étape d'imprégnation du précurseur d'au moins un métal précieux (C),
d) - un second traitement thermique en milieu réducteur entre 200 et 900°C et de préférence entre 300 et 700°C,
e) - une troisième étape d'imprégnation du précurseur d'au moins un métal noble (D),
f) - un troisième traitement thermique en milieu oxydant entre 200 et 900°C et de préférence entre 300 et 700°C.

18. Procédé de préparation selon l'une des revendications 16 à 17, **caractérisé en ce que** l'atmosphère réductrice du milieu de traitement thermique réducteur après l'imprégnation du précurseur de métal précieux (C), présente une teneur volumique en hydrogène comprise entre 0,01% et 5% volume et de préférence entre 0,1 et 1% volume.

19. Procédé de préparation selon l'une des revendications 16 à 18 d'un catalyseur selon l'une des revendications 12 à 15, **caractérisé en ce qu'**il comprend en outre une étape d'enduction du substrat monolithique par au moins un oxyde réfractaire avant ou après une ou plusieurs des différentes étapes (a à f) d'imprégnation et de traitement thermique des revendications 17 et 18.

20. Procédé selon l'une des revendications 16 à 19, **caractérisé en ce que** la surface spécifique de l'oxyde inorganique avant imprégnation de l'étape (a), est comprise entre 10 et 250 m²/g.

21. Procédé selon la revendication 20 **caractérisé en ce que** ladite surface spécifique est comprise entre 50 et 150 m²/g.

22. Procédé selon l'une des revendications 16 à 21, **caractérisé en ce que** la température de chaque traitement thermique après imprégnation de l'oxyde inorganique réfractaire par au moins un des éléments (A), (B), (C) et (D) est comprise entre 300 et 900°C.

23. Procédé selon la revendication 22, **caractérisé en ce que** ladite température est comprise entre 400 et 700°C.

24. Utilisation d'un catalyseur selon l'une des revendications 1 à 15, pour la réduction des oxydes d'azote dans un gaz d'échappement surstoechiométrique en composés oxydants et plus particulièrement en oxygène.

25. Utilisation selon la revendication 24, dans laquelle le gaz d'échappement est surstoechiométrique en oxygène.

26. Utilisation d'un catalyseur selon l'une des revendications 24 et 25, dans l'élimination des oxydes d'azote émis par les moteurs stationnaires, les véhicules à moteur Diesel, les véhicules à essence à réglage pauvre et par les turbines fonctionnant au gaz naturel ou avec un carburant liquide.

27. Utilisation selon l'une des revendications 24 à 26, dans laquelle les composés réducteurs mis en oeuvre pour réaliser la réduction des oxydes d'azote sont choisis parmi les hydrocarbures, les alcools, les éthers et autres produits organiques oxygénés, ainsi que les carburants pour les moteurs à essence, les moteurs Diesel et les turbines.

## Claims

1. A catalyst for reducing nitrogen oxides to molecular nitrogen in a medium which is superstoichiometric in oxidizing agents by reducing agents, comprising an active phase, the composition of which, expressed as weight percentage with respect to the product calcined at 1000°C for 4 hours is as follows:
- 50% to 99.78% of at least one inorganic refractory oxide;
modified by addition of:
- 0.1% to 20% of at least one element (A) from the group formed by the rare-earths, expressed as the oxide; and
- 0.1% to 15% of at least one element (B) from group IIA of the alkaline-earths, expressed as the oxide;
and on which are deposited:
- 0.01% to 5% of at least one metal (C) from the group formed by the precious metals of the platinum group; and
- 0.01% to 10% of at least one metal (D) from the group formed by the noble metals silver and gold,

2. A catalyst according to claim 1, **characterized in that** the inorganic refractory oxide is alpha alumina, beta alumina, delta alumina, gamma alumina khi alumina, theta alumina, a silica, a silica- alumina, a zeolite, titanium oxide or zirconium oxide and their combinations, mixed oxides or a solid solution comprising at least two of the oxides defined above.

3. A catalyst according to claim 2, **characterized in that** the inorganic refractory oxide is alumina.

4. A catalyst according to any one of claims 1 to 3, **characterized in that** the element (A) from the group formed by the rare-earths is lanthanum, neodymium, praseodymium or a mixture of at least two of these elements.

5. A catalyst according to claim 4, **characterized in that** element (A) from the group formed by rare-earths is lanthanum.

6. A catalyst according to anyone of claims 1 to 5, **characterized in that** element (B) from group IIA of the alkaline-earth elements is calcium, barium, strontium or a mixture of at least two of these elements.

7. A catalyst according to claim 6, **characterized in that** element (B) from the group of the alkaline-earths is barium.

8. A catalyst according to any one of claims 1 to 7, **characterized in that** metal (C) from the group of the precious metals is platinum, ruthenium, iridium or a mixture of at least two of these elements.

9. A catalyst according to claim 8, **characterized in that** element (C) from the group of the precious metals is platinum.

10. A catalyst according to any one of claims 1 to 9, **characterized in that** the composition by weight of the active phase, expressed as weight percentage with respect to product calcined at 1000°C, is as follows:
- 67% to 98.3% of at least one inorganic refractory oxide;
- 1% to 15% of at least one element (A) from the group of the rare-earths, expressed as the oxide;
- 2% to 10% of at least one element (B) from group IIA of the alkaline-earths, expressed as the oxide;
- 2% to 3% of at least one metal (C) from the group of the precious metals of the platinum group; and
- 0.1% to 5% of at least one metal (D) from the group of the noble metals silver and gold.

11. A catalyst according to any one of claims 1 to 10, **characterized in that** the catalytic phase is in the form of spherules, extrudates or pellets.

12. A catalyst according to any one of claims 1 to 10, **characterized in that** the catalytic phase is supported on a monolithic substrate.

13. A catalyst according to claim 12, **characterized in that** said monolithic substrate is made of ceramic or metal.

14. A catalyst according to claim 13, **characterized in that** the metallic substrate has a coiled or layered structure with straight or zig-zagged channels, or a fibrous structure.

15. A catalyst according to any one of claims 12 to 14, **characterized in that** the weight of catalytic phase deposited or prepared on the monolith substrate is in the range 20 g to 300 g, preferably in the range 50 g to 200 g per litre of substrate.

16. A process for the preparation of a catalyst in accordance with any one of claims 1 to 11, **characterized in that** it comprises:
a) a step for impregnating a support constituted by at least one inorganic refractory oxide, with all or a portion of at least one precursor of at least one rare-earth (A) and/or with all or a portion of at least one precursor of at least one alkaline-earth metal (B), followed by:
b) optionally a step of impregnation by the rest of precursors of at least one rare-earth (A) and/or at least one alkaline-earth metal (B),
followed by:
c) a step of impregnation by all or a portion of at least one precursor of at least one precious metal (C) and/or using all or a portion of at least one precursor of at least one noble metal (D);
followed by:
d) optionally a step of impregnation by the rest of at least one precursor of at least one noble metal (D) and/or by the optional rest of at least one precursor of at least one precious metal (C), and
e) a heat treatment step in an oxidizing, neutral or reducing medium after each impregnation step, carried out at a temperature in the range 200°C and 900°C.

17. A process for the preparation of a catalyst according to claim 16, **characterized in that** it comprises :
a) a step for impregnating a support constituted by least one inorganic refractory oyide by the precursors of at least one rare-earth (A) and at least one alkaline-earth metal (B);
b) a first calcining step carried out in the range 200°C to 900°C, preferably in the range 300°C to 900°C;
c) a second step for impregnating a precursor of at least one precious metal (C);
d) a second heat treatment step in a reducing medium carried out at a temperature in the range 200°C to 900°C, preferably in the range 300°C to 700°C;
e) a third step for impregnating a precursor least one noble metal (D);
f) a third heat treatment step in an oxidizing medium carried out at a temperature in the range 200°C to 900°C, preferably in the range 300°C to 700°C.

18. A preparation process according to any one of claims 16 and 17, **characterized in that** the reducing atmosphere for the reducing heat treatment after impregnating the precursor of precious metal (C) has a hydrogen content in the range 0.01% to 5% by volume, preferably 0.1% to 1% by volume.

19. A preparation process according to any one of claims 16 to 18, for a catalyst according to any one of claims 12 to 15, **characterized in that** it further comprises a step for coating a monolithic substrate with at least one refractory oxide before or after one or more of steps (a) to (f) for impregnation and heat treatment of claims 17 and 18.

20. A process according to any one of claims 16 to 19, **characterized in that** the specific surface area of the inorganic oxide before impregnation step (a) is in the range 10 to 250 m²/g.

21. A process according to claim 20, **characterized in that** said specific surface area is in the range 50 to 150 m²/g.

22. A process according to any one of claims 16 to 21, **characterized in that** the temperature of each calcination treatment after impregnation of the inorganic refractory oxide with elements (A), (B), (C) and (D) is in the range 300°C to 900°C.

23. A process according to claim 22, **characterized in that** said temperature is in the range 400°C to 700°C.

24. The use of a catalyst according to any one of claims 1 to 15, to reduce nitrogen oxides in an exhaust gas which is superstoichiometric in oxidizing compounds, in particular oxygen.

25. The use according to claim 24, wherein the exhaust gas is superstoichiometric in oxygen.

26. The use of a catalyst according to any one of claims 24 and 25, for the elimination of nitrogen oxides emitted by stationary engines, vehicles with Diesel engines, lean burn petrol driven vehicles and turbines using natural gas or liquid fuel.

27. The use of a catalyst according to any one of claim 24 to 26, **characterized in that** the reducing compounds used to reduce the nitrogen oxides are selected from hydrocarbons, alcohols, ethers and other oxygen-containing organic substances, as well as fuels for petrol engines, Diesel engines and turbines.

## Patentansprüche

1. Katalysator zur Reduktion der Stickoxide zu molekularem Stickstoff durch reduzierende Verbindungen in einem an Oxidierenden Verbindungen über-stöchiometrischen Milieu, umfassend eine aktive Phase, ausgedrückt in Masseprozent im Verhältnis zum, bei 1000°C für vier Stunden kalziniertem, Produkt:
- 50 - 99,78% wenigstens eines feuerfesten anorganischen Oxids,
modifiziert durch Zugabe von
- 0,1 bis 20% wenigstens eines Elements (A), das zur Gruppe der Seltenerden gehört, ausgedrückt in Oxidform, und
- 0,1 bis 15% wenigstens eines Elements (B), das zur Gruppe IIA der Erdalkalimetalle gehört, ausgedrückt in Oxidform;
und auf dem abgeschieden werden:
- 0,01 bis 5% wenigstens eines Metalls (C), das zur Gruppe der Edelmetalle der Platinfamilie gehört, und
- 0,01 bis 10% wenigstens eines Metalls (D), das zur Gruppe der Edelmetalle, Silber und Gold gehört.

2. Katalysator nach Anspruch 1, **dadurch gekennzeichnet, dass** das feuerfeste anorganische Oxid alpha-Aluminiumoxid, beta-Aluminiumoxid, delta-Aluminiumoxid, gamma-Aluminiumoxid, khi-Aluminiumoxid, theta-Aluminiumoxid, Siliziumoxide, Silizium-Aluminiumoxide, Zeolithe, Titanoxid, Zirkoniumoxid und deren Kombinationen, die gemischten Oxide oder eine feste Lösung, die wenigstens zwei der vorgenannten Oxide umfasst.

3. Katalysator nach Anspruch 2, **dadurch gekennzeichnet, dass** das feuerfeste anorganische Oxid Aluminiumoxid ist.

4. Katalysator nach einem der Ansprüche 1 bis 3, **dadurch gekennzeichnet, dass** das Element (A), das zur Gruppe der Seltenerden gehört, Lanthan, Neodym, Praseodym oder das Gemisch von wenigstens zwei dieser Elemente ist.

5. Katalysator nach Anspruch 4, **dadurch gekennzeichnet, dass** das Element (A), das zur Gruppe der Seltenerden gehört, Lanthan ist.

6. Katalysator nach einem der Ansprüche 1 bis 5, **dadurch gekennzeichnet, dass** das Element (B), das zu den Gruppen IIA der Erdalkalimetalle gehört, Calcium, Barium, Strontium oder das Gemisch von wenigstens zwei dieser Elemente ist.

7. Katalysator nach Anspruch 6, **dadurch gekennzeichnet, dass** das Element (B), das zur Gruppe der Erdalkalimetalle gehört, Barium ist.

8. Katalysator nach einem der Ansprüche 1 bis 7, **dadurch gekennzeichnet, dass** das Metall (C), das zur Gruppe der Edelmetalle gehört, Platin, Ruthenium, Iridium oder das Gemisch von wenigstens zwei dieser Elemente ist.

9. Katalysator nach Anspruch 8, **dadurch gekennzeichnet, dass** das Element (C), das zur Gruppe der Edelmetalle gehört, Platin ist.

10. Katalysator nach einem der Ansprüche 1 bis 9, **dadurch gekennzeichnet, dass** die Zusammensetzung der aktiven Phase, ausgedrückt in Masseprozent im Verhältnis zum, bei 1000°C für vier Stunden kalziniertem, Produkt ist:
- 67 - 98,3% wenigstens eines feuerfesten anorganischen Oxids,
- 1 bis 15% wenigstens eines Elements (A), das zur Gruppe der Seltenerden gehört, ausgedrückt in Oxidform,
- 2 bis 10% wenigstens eines Elements (B), das zur Gruppe IIA der Erdalkalimetalle gehört, ausgedrückt in Oxidform;
- 2 bis 3% wenigstens eines Metalls (C), das zur Gruppe der Edelmetalle der Platinfamilie gehört, und
- 0,1 bis 5% wenigstens eines Metalls (D), das zur Gruppe der Edelmetalle, Silber und Gold gehört.

11. Katalysator nach einem der Ansprüche 1 bis 10, **dadurch gekennzeichnet, dass** die katalytische Phase in Form von Kugeln, Extrudaten oder Pastillen vorliegt.

12. Katalysator nach einem der Ansprüche 1 bis 10, **dadurch gekennzeichnet, dass** die katalytische Phase durch ein monolithisches Substrat getragen ist.

13. Katalysator nach Anspruch 12, **dadurch gekennzeichnet, dass** das monolithische Substrat aus Keramik oder aus Metall ist.

14. Katalysator nach Anspruch 13, **dadurch gekennzeichnet, dass** das metallische Substrat und eine gerollte oder gestapelte Struktur mit geraden Kanälen oder Zick-Zack-Kanälen oder eine Faserstruktur hat.

15. Katalysator nach einem der Ansprüche 12 - 14, **dadurch gekennzeichnet, dass** die Masse der auf dem monolithischen Substrat abgeschiedenen oder hergestellten katalytischen Phase zwischen 20 und 300 g und vorzugsweise zwischen 50 und 200g pro Liter Substrat liegt.

16. Verfahren zur Herstellung eines Katalysators nach einem der Ansprüche 1 bis 11, **dadurch gekennzeichnet, dass** es umfasst:
a) eine Imprägnierungsstufe eines Trägers, der aus wenigstens einem feuerfesten anorganischen Oxid besteht, durch alles oder einen Teil wenigstens eines Vorläufers wenigstens einer Seltenerde (A) und/oder alles oder einen Teil wenigstens eines Vorläufers wenigstens eines Erdalkalimetalls (B), gefolgt von
b) gegebenenfalls einer Imprägnierungsstufe durch den Rest der Vorläufer wenigstens einer Seltenerde (A) und/oder wenigstens eines Erdalkalimetalls (B), gefolgt von
c) einer Imprägnierungsstufe durch alles oder einen Teil von wenigstens einem Vorläufer wenigstens eines Edelmetalls (C) und/oder durch alles oder einen Teil wenigstens eines Vorläufers wenigstens eines Edelmetalls (D), gefolgt von
d) gegebenenfalls einer Imprägnierungsstufe durch den Rest wenigstens eines Vorläufers wenigstens eines Edelmetalls (D) und/oder den eventuellen Rest von wenigstens einem Vorläufer wenigstens eines Edelmetalls (C),
e) eine thermischen Behandlungsstufe im oxidierenden, neutralen oder reduzierenden Milieu nach jeder Imprägnierungsstufe bei einer Temperatur zwischen 200 und 900°C.

17. Verfahren zur Herstellung eines Katalysators nach Anspruch 16, **dadurch gekennzeichnet, dass** es umfasst:
a) eine Imprägnierungsstufe eines Trägers, der aus wenigstens einem feuerfesten anorganischen Oxid besteht, durch Vorläufer wenigstens einer Seltenerde (A) und wenigstens eines Erdalkalimetalls (B),
b) eine erste Kalzinierungsstufe zwischen 200 und 900°C und vorzugsweise 300 und 900°C,
c) eine zweite Imprägnierungsstufe des Vorläufers von wenigstens einem Edelmetall (C),
d) eine zweite thermische Behandlungsstufe im reduzierenden Milieu zwischen 200 und 900°C und vorzugsweise 300 und 700°C,
e) eine dritte Imprägnierungsstufe des Vorläufers von wenigstens einem Edelmetall (D),
f) eine dritte thermische Behandlungsstufe im oxidierenden Milieu zwischen 200 und 900°C und vorzugsweise 300 und 700°C.

18. Herstellungsverfahren nach einem der Ansprüche 16 bis 17, **dadurch gekennzeichnet, dass** die reduzierende Atmosphäre des reduzierenden thermischen Behandlungsmilieus nach Imprägnierung des Vorläufers eines Edelmetalls (C) einen Volumengehalt an Wasserstoff aufweist, der zwischen 0,01 Vol.-% und 5 Vol.-% und vorzugsweise zwischen 0,1 Vol.-% und 1 Vol.-% liegt.

19. Herstellungsverfahren nach einem der Ansprüche 16 bis 18 von einem Katalysator nach einem der Ansprüche 2 bis 5, **dadurch gekennzeichnet, dass** es im übrigen eine Beschichtungsstufe des monolithischen Substrats durch wenigstens ein feuerfestes Oxid umfasst, vor oder nach einer oder mehrerer verschiedener Stufen (a bis f) zur Imprägnierung und thermischen Behandlung der Ansprüche 17 und 18.

20. Verfahren nach einem der Ansprüche 16 bis 19, **dadurch gekennzeichnet, dass** die spezifische Oberfläche des anorganischen Oxids vor Imprägnierung der Stufe (a) zwischen 10 und 250m²/g liegt.

21. Verfahren nach Anspruch 20, **dadurch gekennzeichnet, dass** die spezifische Oberfläche zwischen 50 und 150m²/g liegt.

22. Verfahren nach einem der Ansprüche 16 bis 21, **dadurch gekennzeichnet, dass** die Temperatur jeder thermischen Behandlung nach Imprägnierung des feuerfesten anorganischen Oxids durch wenigstens eines der Elemente (A), (B), (C) und (D) zwischen 300 und 900°C liegt.

23. Verfahren nach Anspruch 22, **dadurch gekennzeichnet, dass** die Temperatur zwischen 400 und 700°C liegt.

24. Verwendung eines Katalysators nach einem der Ansprüche 1 bis 15, zur Reduktion der Stickoxide in einem an oxidierenden Verbindungen und insbesondere Sauerstoff über-stöchiometrischen Auspuffgas.

25. Verwendung nach Anspruch 24, bei der das Auspuffgas überstöchiometrisch an Sauerstoff ist.

26. Verwendung eines Katalysators nach Anspruch 24 und 25, bei der Entfernung der Stickoxide, die durch stationäre Motoren, Fahrzeuge mit Dieselmotor, Benzinfahrzeuge mit Magergemischregelung und durch mit Erdgas arbeitende oder mit Flüssigtreibstoff arbeitende Turbinen ausgestoßen werden.

27. Verwendung nach einem der Ansprüche 24 bis 26, bei dem die reduzierenden Verbindungen, die zur Durchführung der Reduktion der Stickoxide eingesetzt werden, gewählt sind unter Kohlenwasserstoffen, Alkoholen, Ethern oder anderen sauerstoffhaltigen organischen Produkten sowie Brennstoffen für Benzinmotoren, Dieselmotoren oder Turbinen.
